# FASCICULE DE BREVET EUROPEEN

(11) **EP 2 814 689 B1**
(45) Date de publication et mention de la délivrance du brevet: **06.04.2016**
(21) Numéro de dépôt: 13706604.9
(22) Date de dépôt: 31.01.2013
(51) Int. Cl.: B60N 2/01, B60N 2/68, B60R 21/02

(54) **DISPOSITIF DE PROTECTION D'UN SIÈGE ARRIÈRE SANS ARMATURE DE VÉHICULE AUTOMOBILE**
VORRICHTUNG ZUM SCHUTZ EINES RAHMENLOSEN RÜCKSITZES EINES KRAFTFAHRZEUGES
DEVICE FOR PROTECTING A MOTOR VEHICLE FRAMELESS REAR SEAT

(30) Priorité: 13.02.2012 FR 1251295
(43) Date de publication de la demande: 24.12.2014
(73) Titulaire: Peugeot Citroën Automobiles SA, 78140 Vélizy Villacoublay (FR)
(72) Inventeur: DESPLANCHES, Patrice, F-78100 St Germain En Laye (FR)
(74) Mandataire: Fosse, Danièle
(86) Numéro de dépôt international: PCT/FR2013/050201
(87) Numéro de publication internationale: WO 2013/121125

(56) Documents cités:
- EP-A2- 0 825 071
- DE-A1- 19 744 664
- GB-A- 2 312 652

## Description

L'invention concerne les véhicules automobiles, et plus précisément la protection de certains sièges arrière qui équipent certains véhicules automobiles.

On entend ici par « siège » un équipement comprenant une assise, destinée à être montée sur une surface de support (éventuellement un plancher) d'un véhicule automobile, et un dossier, éventuellement monté à rotation. On notera que l'invention concerne aussi bien les sièges de type monoplace que les sièges de type banquette qui peuvent accueillir au moins deux passagers.

Il a été très récemment proposé d'équiper certains véhicules automobiles de siège(s) arrière dépourvu(s) d'armature au moins au niveau du dossier, afin de limiter leur complexité et/ou leur coût et/ou leur poids. Le dossier d'un siège arrière de ce type comporte essentiellement une mousse synthétique semi-rigide qui, hélas, n'est pas capable de supporter certaines contraintes en cas de choc sensiblement frontal. Il est en effet rappelé que certaines règles de sécurité nationales ou régionales définissent les contraintes minimales, qui sont induites en cas de choc frontal par des objets temporairement placés dans la zone de coffre arrière, et que doivent supporter les sièges arrière en l'absence d'une cloison de séparation entre leur habitacle et la zone de coffre arrière.

GB2312652 décrit un dispositif de protection conformément au préambule de la revendication 1. L'invention a donc pour but de proposer un dispositif, destiné à protéger au moins un siège arrière d'un véhicule automobile comprenant une partie structurelle munie de deux parties latérales arrière définissant des zones d'appui pour le dossier du siège arrière, et comprenant :
- deux moyens d'ancrage comportant chacun une plaque munie d'un premier trou et d'un bord prolongé par une protubérance incurvée vers une face arrière, et
- une pièce de protection comprenant deux extrémités latérales opposées, comprenant chacune un deuxième trou et propres à être solidarisées respectivement aux parties latérales arrière au moyen de vis traversant les premier et deuxième trous après couplage des protubérances aux parties latérales arrière.

Grâce à un tel agencement, lorsque le véhicule automobile subit un choc sensiblement frontal, les objets qui sont placés dans sa zone de coffre arrière viennent heurter la pièce de protection, ce qui va provoquer son cintrage mais de façon limitée du fait de l'absorption d'une partie des forces de cisaillement par les plaques des moyens d'ancrage (via le couplage de leurs protubérances aux parties latérales arrière) et les vis. Le dossier du siège arrière est donc ainsi efficacement protégé par le dispositif de protection selon l'invention.

Le dispositif de protection selon l'invention peut comporter d'autres caractéristiques qui peuvent être prises séparément ou en combinaison, et notamment :
- sa pièce de protection peut être destinée à être solidarisée aux parties latérales arrière dans une position sensiblement transversale avec ses deux extrémités latérales sensiblement à une même hauteur ;
- chaque protubérance peut être propre à être introduite dans un troisième trou défini dans l'une des parties latérales arrière ;
- il peut également comprendre deux pièces de couplage comprenant chacune une extrémité supérieure propre à être couplée à une tablette arrière solidarisée à la partie structurelle, et une extrémité inférieure solidarisée à la pièce de protection ;
   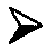 l'extrémité inférieure de chaque pièce de couplage peut être soudée à la pièce de protection ;
   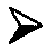 l'extrémité supérieure de chaque pièce de couplage peut être solidarisée à une pièce de renfort destinée à être solidarisée à la partie structurelle et à renforcer une partie avant de ladite tablette arrière ;
      - l'extrémité supérieure de chaque pièce de couplage peut être solidarisée par vissage à l'une des pièces de renfort ;
   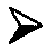 il peut comprendre les pièces de renfort ;
   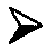 chaque pièce de couplage peut être réalisée par emboutissage ;
   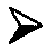 chaque pièce de couplage peut définir un tirant.

L'invention propose également un véhicule automobile comprenant une partie structurelle, munie de deux parties latérales arrière définissant des zones d'appui pour le dossier d'un siège arrière, et un dispositif de protection du type de celui présenté ci-avant et solidarisé aux parties latérales arrière.

D'autres caractéristiques et avantages de l'invention apparaîtront à l'examen de la description détaillée ci-après, et des dessins annexés, sur lesquels :
- la figure 1 illustre schématiquement, dans une vue de face du côté avant, un exemple de partie arrière d'une partie structurelle d'un véhicule automobile, équipée d'un dispositif de protection selon l'invention, et
- la figure 2 illustre schématiquement et fonctionnellement, dans une vue en coupe selon l'axe II-II de la figure 1, l'une des extrémités de la pièce de protection du dispositif de protection solidarisée à un élément de l'une des parties latérales arrière de la partie structurelle via un moyen d'ancrage dudit dispositif de protection.

Les dessins annexés pourront non seulement servir à compléter l'invention, mais aussi contribuer à sa définition, le cas échéant.

L'invention a pour but de proposer un dispositif de protection D destiné à protéger au moins un siège arrière installé dans un habitacle de véhicule automobile V.

On considère dans ce qui suit, à titre d'exemple non limitatif, que le véhicule automobile V est une voiture de type berline. Mais l'invention n'est pas limitée à ce type de véhicule automobile. Elle concerne en effet tout véhicule automobile comportant une zone de coffre arrière et un habitacle dans une partie arrière duquel est installé au moins un siège arrière dépourvu d'armature (au moins au niveau de son dossier) et communiquant avec la zone de coffre arrière.

Par ailleurs, on considère dans ce qui suit, à titre d'exemple non limitatif, que le siège arrière est une banquette pouvant accueillir, en position assise, au moins deux passagers. Mais l'invention n'est pas limitée à ce type de siège. Elle concerne en effet tout type de siège pouvant accueillir, en position assise, au moins un passager. Par conséquent, il pourra également s'agir d'un siège de type monoplace.

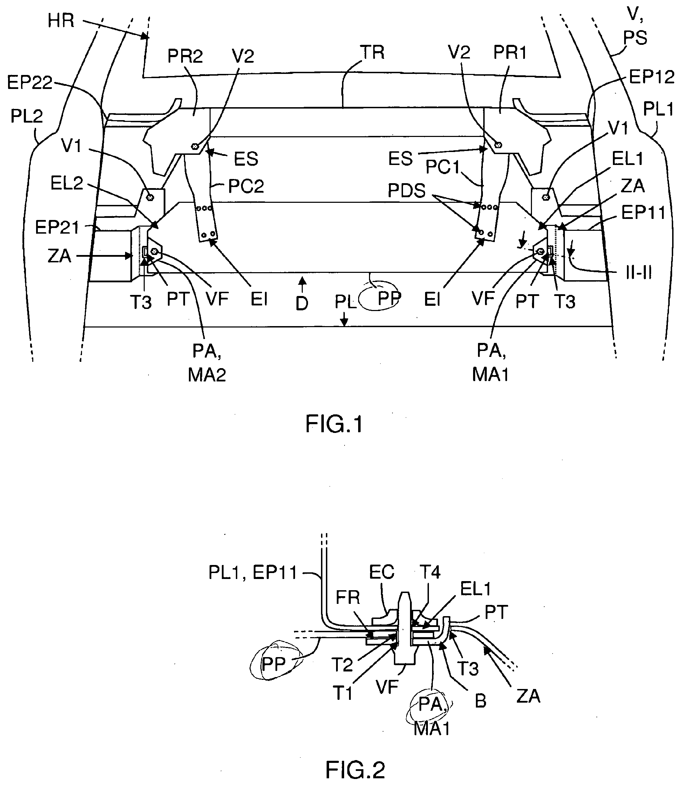

On a schématiquement représenté sur la figure 1 un exemple de partie arrière d'une partie structurelle PS d'un véhicule automobile. Cette partie arrière comprend notamment deux parties latérales arrière PLi (i = 1 ou 2), un plancher PL et un hayon (ou un panneau mobile) HR qui délimitent ensemble une zone de coffre arrière et une portion d'habitacle dans laquelle chaque siège arrière (non représenté) est installé, par exemple sur une partie aménagée du plancher PL.

Comme évoqué précédemment, chaque siège arrière comprend une assise et un dossier.

Le dossier comporte une mousse synthétique semi-rigide et est dépourvu d'armature. Il est éventuellement monté à rotation sur le plancher PL ou un autre élément de la partie structurelle PS suivant une direction transversale. On entend ici par « direction transversale » une direction qui est sensiblement perpendiculaire aux côtés latéraux du véhicule (automobile), qui comportent respectivement les portes latérales (ou portières). Les côtés latéraux sont ici référencés par la lettre i qui peut prendre deux valeurs : 1 et 2. Par exemple la valeur 1 désigne le côté gauche tandis que la valeur 2 désigne le côté droit.

On notera que le dossier est ici destiné à s'appuyer en position redressée sur une zone d'appui ZA d'au moins un élément EPij faisant partie de l'une des deux parties latérales arrière PLi de la partie structurelle PS. Dans l'exemple non limitatif illustré sur la figure 1 chaque partie latérale arrière PLi comprend au moins un élément inférieur EPi1 (j = 1) rapporté et un élément supérieur EPi2 (j = 2) rapporté qui sont soudés sur une pièce « principale », et solidarisés l'un à l'autre par une vis V1. Ici, chaque élément inférieur EPi1 définit une zone d'appui ZA pour un dossier. Mais cela n'est pas obligatoire. En effet, chaque partie latérale arrière PLi pourrait ne comprendre qu'une pièce principale, et dans ce cas, c'est une sous-partie de chaque partie latérale arrière PLi qui définit une zone d'appui ZA pour un dossier.

L'assise comporte une mousse synthétique semi-rigide et est éventuellement dépourvue d'armature. Elle est montée sur le plancher PL ou un autre élément de la partie structurelle PS.

On notera que les mousses de dossier et d'assise peuvent être éventuellement recouvertes d'une coiffe d'habillage, en tissu ou en cuir.

Afin de protéger chaque siège arrière des objets qui sont placés temporairement derrière lui dans la zone de coffre arrière, l'invention propose d'équiper la partie structurelle PS d'un dispositif de protection D à l'interface entre l'habitacle et la zone de coffre arrière.

Comme illustré sur la figure 1, un dispositif de protection D, selon l'invention, comprend au moins deux moyens d'ancrage MAi et une pièce de protection PP.

Comme illustré sur la figure 2, chaque moyen d'ancrage MAi comporte une plaque PA qui est munie d'un premier trou T1 et d'un bord B. Ce dernier (B) est prolongé en un endroit choisi par une protubérance PT qui est incurvée vers une face arrière FR de la plaque PA. On entend ici par « face arrière » une face qui est orientée vers l'arrière du véhicule V.

Chaque protubérance PT est destinée à être couplée à l'une des parties latérales arrière PLi afin de constituer un point d'ancrage anti-cisaillement en cas de choc frontal, comme on le verra plus loin.

Par exemple, et comme illustré non limitativement, chaque protubérance PT constitue une patte qui est repliée suivant un angle d'environ 90° vers la face arrière FR. Mais d'autres angles peuvent être envisagés, et notamment des angles supérieurs à 90°.

On notera que dans l'exemple non limitatif illustré sur les figures 1 et 2 chaque plaque PA comprend une forme générale en triangle. Mais d'autres formes peuvent être envisagées, y compris des formes non géométriques.

On notera également que chaque plaque PA peut être réalisée dans un matériau métallique résistant. Ce matériau métallique peut être, par exemple, de l'acier ou de l'aluminium.

La pièce de protection PP comprend deux extrémités latérales ELi opposées qui comprennent chacune un deuxième trou T2 destiné à être placé en regard du premier trou T1 de la plaque PA correspondante, et qui sont propres à être solidarisées respectivement aux parties latérales arrière PLi au moyen de vis VF qui traversent notamment les premier T1 et deuxième T2 trous après couplage des protubérances PT aux parties latérales arrière PLi.

Comme illustré, chaque partie latérale arrière PLi comprend un (quatrième) trou T4 en regard duquel doivent être placés les premier T1 et deuxième T2 trous et qui est propre à être traversé par une vis VF en vue de l'immobilisation de l'une des deux extrémités latérales ELi via la plaque PA correspondante. On notera que dans l'exemple non limitatif illustré sur la figure
2 on a prévu derrière le quatrième trou T4 un écrou EC dont le filetage interne est destiné à coopérer avec le filetage externe d'une vis VF. Par exemple, cet écrou EC peut être préalablement soudé sur la face arrière de la paroi dans laquelle est défini le quatrième trou T4 afin de renforcer la solidarisation de l'extrémité latérale ELi correspondante de la pièce de protection PP à la partie latérale arrière PLi correspondante, notamment en présence d'une force de cisaillement suivant une direction sensiblement parallèle à la direction transversale.

On notera également que dans l'exemple non limitatif illustré sur les figures 1 et 2 chaque quatrième trou T4 est défini dans une paroi avant de l'un des éléments inférieurs EPi1. Mais cela n'est pas une obligation.

On notera également que dans l'exemple non limitatif illustré sur la figure 1 la pièce de protection PP est solidarisée aux parties latérales arrière PLi dans une position sensiblement transversale. Dans ce cas, ses deux extrémités latérales ELi sont sensiblement solidarisées aux parties latérales arrière PLi à une même hauteur. Mais cela n'est pas obligatoire, d'autres agencements pouvant être en effet envisagés.

On notera également que dans l'exemple non limitatif illustré sur les figures 1 et 2 chaque élément inférieur EPi1 comprend un troisième trou T3 au niveau de la paroi avant dans laquelle est défini un quatrième trou T4. Ce troisième trou T3 est destiné à permettre l'introduction de la protubérance PT d'une plaque PA en vue de l'ancrage (ou couplage) de cette dernière (PA) à l'élément inférieur EPi1 correspondant et donc à la partie latérale arrière PLi correspondante. Mais dans une variante de réalisation la protubérance PT d'une plaque PA pourrait être placée contre un bord d'ancrage d'une paroi de l'élément inférieur EPi1 correspondant ou de la partie latérale arrière PLi correspondante.

On notera également qu'afin que la pièce de protection PP puisse efficacement assurer son rôle d'arrêt de charge, elle doit présenter une extension verticale (suivant une direction sensiblement perpendiculaire au plancher PL) relativement importante. Typiquement cette extension verticale est comprise entre environ 15 cm et environ 30 cm.

On comprendra que lorsque le véhicule V subit un choc sensiblement frontal et que des objets (ou charges) sont placé(e)s dans sa zone de coffre arrière, ces objets se retrouvent projetés contre la pièce de protection PP qui va alors se cintrer de façon limitée grâce à l'absorption d'une partie des forces de cisaillement (sensiblement transversales) par les plaques PA des moyens d'ancrage MAi (du fait du couplage de leurs protubérances PT aux parties latérales arrière PLi) et les vis VF. Ces dernières (VF) se retrouvent en fait renforcées par la présence des plaques d'ancrage PA, si bien qu'elles risquent moins d'être sectionnées, et dans l'hypothèse où elles seraient sectionnées elles peuvent être encore remplacées, au moins partiellement, par les plaques d'ancrage PA. Il en résulte une protection efficace du dossier du siège arrière.

On notera que la pièce de protection PP peut être réalisée par emboutissage simple ou multiple d'une pièce en matériau métallique résistant. Ce matériau métallique peut être, par exemple, de l'acier ou de l'aluminium.

Afin d'améliorer encore plus la protection précitée, le dispositif de protection D peut également et avantageusement, comme illustré non limitativement sur la figure 1, comprendre deux pièces de couplage PCi comprenant chacune, d'une part, une extrémité supérieure ES propre à être couplée à une tablette arrière TR solidarisée à la partie structurelle PS, et, d'autre part, une extrémité inférieure El solidarisée à la pièce de protection PP.

Chaque pièce de couplage PCi est, de préférence et comme illustré, solidarisée au voisinage de l'une des deux extrémités latérales ELi de la pièce de protection PP et de l'une des deux extrémités latérales de la tablette arrière TR. Mais une solidarisation plus centrale peut être envisagée.

Comme illustré non limitativement sur la figure 1, chaque extrémité inférieure EI de chaque pièce de couplage PCi peut être soudée à la pièce de protection PP. Par exemple, on peut effectuer plusieurs points de soudage PDS. Ainsi, dans l'exemple illustré cinq points de soudage PDS assurent la solidarisation de chaque extrémité inférieure EI à la pièce de protection PP. Mais dans une variante on pourrait remplacer la solidarisation par soudage par une solidarisation par vissage.

Par ailleurs, et comme illustré non limitativement sur la figure 1, chaque extrémité supérieure ES de chaque pièce de couplage PCi peut être couplée à la tablette arrière TR via une pièce de renfort PRi qui est destinée à être solidarisée à la partie structurelle PS et à renforcer une partie avant de la tablette arrière TR. Cette dernière (TR) peut être éventuellement solidarisée de façon amovible aux deux pièces de renfort PRi. Mais cette solidarisation (y compris permanente) n'est pas obligatoire.

On comprendra que lorsque le véhicule V subit un choc sensiblement frontal et que des objets sont projetés contre la pièce de protection PP, une partie des efforts encaissés par cette dernière (PP) est transmise aux pièces de renfort PRi, et donc aux parties latérales arrière PLi, via les pièces de couplage PCi (agissant comme des tirants), ce qui permet de limiter sensiblement le cintrage de la pièce de protection PP et l'amplitude des forces de cisaillement (sensiblement transversales) subies par les vis VF et les protubérances PT des plaques PA des moyens d'ancrage MAi.

On notera que dans l'exemple non limitatif illustré sur les figures 1 et 2 chaque pièce de renfort PRi est solidarisée à l'un des deux éléments supérieurs EPi2 des parties latérales arrière PLi de la partie structurelle PS. Cette solidarisation peut, comme illustré, se faire par soudage. Mais dans une variante de réalisation elle pourrait se faire par vissage au moyen d'au moins une vis.

On notera également que dans l'exemple non limitatif illustré sur les figures 1 et 2 chaque extrémité supérieure ES d'une pièce de couplage PCi est solidarisée par vissage, au moyen d'une vis V2, à l'une des pièces de renfort PRi. Mais dans une variante de réalisation cette solidarisation pourrait se faire par soudage.

On notera également que les pièces de renfort PRi peuvent éventuellement faire partie du dispositif de protection D, plutôt que de la tablette arrière TR ou de la partie structurelle PS.

On notera également que chaque pièce de couplage PCi peut être réalisée par emboutissage simple ou multiple d'une pièce en matériau métallique résistant. Ce matériau métallique peut être, par exemple, de l'acier ou de l'aluminium.

On notera également que la pièce de protection PP peut être éventuellement démontée en dévissant les vis V2 et VF lorsque l'on veut augmenter le volume de rangement en rabattant le dossier de la banquette arrière.

L'invention ne se limite pas aux modes de réalisation de dispositif de protection et de véhicule décrits ci-avant, seulement à titre d'exemple, mais elle englobe toutes les variantes que pourra envisager l'homme de l'art dans le cadre des revendications ci-après.

## Revendications

1. Dispositif de protection (D) d'au moins un siège arrière d'un véhicule automobile (V) comprenant une partie structurelle (PS) munie de deux parties latérales arrière (PLi) définissant des zones d'appui (ZA) pour un dossier dudit siège arrière, **caractérisé en ce qu'**il comprend i) deux moyens d'ancrage (MAi) comportant chacun une plaque (PA) munie d'un premier trou (T1) et d'un bord (B) prolongé par une protubérance (PT) incurvée vers une face arrière (FR), et ii) une pièce de protection (PP) comprenant deux extrémités latérales (ELi) opposées, comprenant chacune un deuxième trou (T2) et propres à être solidarisées respectivement auxdites parties latérales arrière (PLi) au moyen de vis (VF) traversant lesdits premier (T1) et deuxième (T2) trous après couplage desdites protubérances (PT) auxdites parties latérales arrière (PLi).

2. Dispositif selon la revendication 1, **caractérisé en ce que** ladite pièce de protection (PP) est destinée à être solidarisée auxdites parties latérales arrière (PLi) dans une position sensiblement transversale avec ses deux extrémités latérales (ELi) sensiblement à une même hauteur.

3. Dispositif selon l'une des revendications 1 et 2, **caractérisé en ce que** chaque protubérance (PT) est propre à être introduite dans un troisième trou (T3) défini dans l'une desdites parties latérales arrière (PLi).

4. Dispositif selon l'une des revendications 1 à 3, **caractérisé en ce qu'**il comprend en outre deux pièces de couplage (PCi) comprenant chacune une extrémité supérieure (ES) propre à être couplée à une tablette arrière (TR) solidarisée à ladite partie structurelle (PS), et une extrémité inférieure (EI) solidarisée à ladite pièce de protection (PP).

5. Dispositif selon la revendication 4, **caractérisé en ce que** ladite extrémité inférieure (EI) de chaque pièce de couplage (PCi) est soudée à ladite pièce de protection (PP).

6. Dispositif selon l'une des revendications 4 et 5, **caractérisé en ce que** ladite extrémité supérieure (ES) de chaque pièce de couplage (PCi) est solidarisée à une pièce de renfort (PRi) destinée à être solidarisée à ladite partie structurelle (PS) et à renforcer une partie avant de ladite tablette arrière (TR).

7. Dispositif selon la revendication 6, **caractérisé en ce que** ladite extrémité supérieure (ES) de chaque pièce de couplage (PCi) est solidarisée par vissage à l'une desdites pièces de renfort (PRi).

8. Dispositif selon l'une des revendications 4 à 7, **caractérisé en ce qu'**il comprend lesdites pièces de renfort (PRi).

9. Dispositif selon l'une des revendications 4 à 8, **caractérisé en ce que** chaque pièce de couplage (PCi) est réalisée par emboutissage.

10. Véhicule automobile (V) comprenant une partie structurelle (PS) munie de deux parties latérales arrière (PLi) définissant des zones d'appui (ZA) pour un dossier d'un siège arrière, **caractérisé en ce qu'**il comprend un dispositif de protection (D) selon l'une des revendications précédentes, et solidarisé auxdites parties latérales arrière (PLi).

## Patentansprüche

1. Schutzvorrichtung (D) für zumindest einen Rücksitz eines Kraftfahrzuges (V), einen Strukturabschnitt (PS) umfassend, der mit zwei hinteren Seitenabschnitten (PLi) versehen ist, die Abstützbereiche (ZA) für eine Rückenlehne des besagten Rücksitzes definieren, **dadurch gekennzeichnet, dass** sie i) zwei Verankerungsmittel (MAi) umfasst, die jeweils eine Platte (PA) umfassen, die mit einem ersten Loch (T1) und mit einem Rand (B) versehen ist, der durch eine Protuberanz (PT) verlängert wird, die zu einer Rückseite (FR) hin gekrümmt ist, und ii) ein Schutzteil (PP), zwei gegenüberliegende seitliche Enden (ELi) umfassend, die jeweils ein zweites Loch (T2) umfassen, und in der Lage sind, anhand von Schrauben (VF) jeweils fest mit den besagten hinteren Seitenabschnitten (PLi) verbunden zu werden, die nach der Kopplung der besagten Protuberanzen (PT) mit den besagten hinteren Seitenabschnitten (PLi) durch das besagte erste (T1) und zweite (T2) Loch führen.

2. Vorrichtung nach Anspruch 1, **dadurch gekennzeichnet, dass** das besagte Schutzteil (PP) dazu bestimmt ist, in einer in etwa quer verlaufenden Position mit seinen beiden seitlichen Enden (ELi) in etwa auf einer selben Höhe fest mit den besagten hinteren Seitenabschnitten (PLi) verbunden zu werden.

3. Vorrichtung nach einem der Ansprüche 1 und 2, **dadurch gekennzeichnet, dass** sich jede Protuberanz (PT) dazu eignet, in ein drittes Loch (T3) eingeführt zu werden, das in einem der besagten hinteren Seitenabschnitte (PLi) definiert wird.

4. Vorrichtung nach einem der Ansprüche 1 bis 3, **dadurch gekennzeichnet, dass** sie darüber hinaus zwei Koppelteile (PCi) umfasst, die jeweils ein oberes Ende (ES) umfassen, das sich dazu eignet, mit einem hinteren Tablett (TR) verbunden zu werden, das fest mit dem besagten Strukturabschnitt (PS) verbunden ist, und ein unteres Ende (EI), das fest mit dem besagten Schutzteil (PP) verbunden ist.

5. Vorrichtung nach Anspruch 4, **dadurch gekennzeichnet, dass** das besagte untere Ende (EI) eines jeden Koppelteiles (PCi) mit dem besagten Schutzteil (PP) verschweißt ist.

6. Vorrichtung nach einem der Ansprüche 4 und 5, **dadurch gekennzeichnet, dass** das besagte obere Ende (ES) eines jeden Koppelteiles (PCi) fest mit einem Verstrebungsteil (PRi) verbunden ist, das dazu bestimmt ist, fest mit dem besagten Strukturabschnitt (PS) verbunden zu werden, und einen vorderen Abschnitt des besagten hinteren Tabletts (TR) zu verstreben.

7. Vorrichtung nach Anspruch 6, **dadurch gekennzeichnet, dass** das besagte obere Ende (ES) eines jeden Koppelteiles (PCi) durch Verschrauben fest mit einem der besagten Verstrebungsteile (PRi) verbunden ist.

8. Vorrichtung nach einem der Ansprüche 4 bis 7, **dadurch gekennzeichnet, dass** sie die besagten Verstrebungsteile (PRi) umfasst.

9. Vorrichtung nach einem der Ansprüche 4 bis 8, **dadurch gekennzeichnet, dass** jedes Koppelteil (PCi) durch Tiefziehen hergestellt wird.

10. Kraftfahrzeug (V), einen Strukturabschnitt (PS) umfassend, der mit zwei hinteren Seitenabschnitten (PLi) versehen ist, die Abstützbereiche (ZA) für eine Rückenlehne eines Rücksitzes definieren, **dadurch gekennzeichnet, dass** es eine Schutzvorrichtung (D) nach einem der vorherigen Ansprüche umfasst, und fest mit den besagten hinteren Seitenabschnitten (PLi) verbunden ist.

## Claims

1. Device (D) for protecting at least one rear seat of a motor vehicle (V), comprising a structural part (PS) provided with two rear lateral parts (PLi) defining support zones (ZA) for a backrest of said rear seat, **characterised in that** it comprises i) two anchoring means (MAi) each comprising a plate (PA) provided with a first hole (T1) and an edge (B) extended by a protuberance (PT) curved towards a rear face (FR), and ii) a protective piece (PP) comprising two opposite lateral ends (ELi), each comprising a second hole (T2) and able to be secured respectively to said rear lateral parts (PLi) by means of screws (VF) passing through said first (T1) and second (T2) holes after coupling of said protuberances (PT) to said rear lateral parts (PLi).

2. Device according to claim 1, **characterised in that** said protective piece (PP) is intended to be secured to said rear lateral parts (PLi) in a substantially transverse position with its two lateral ends (ELi) substantially at the same height.

3. Device according to one of claims 1 and 2, **characterised in that** each protuberance (PT) is able to be introduced into a third hole (T3) defined in one of said rear lateral parts (PLi).

4. Device according to one of claims 1 to 3, **characterised in that** it further comprises two coupling pieces (PCi) each comprising a top end (ES) able to be coupled to a rear panel (TR) secured to said structural part (PS), and a bottom end (EI) secured to said protective piece (PP).

5. Device according to claim 4, **characterised in that** said bottom end (EI) of each coupling piece (PCi) is welded to said protective piece (PP).

6. Device according to one of claims 4 and 5, **characterised in that** said top end (ES) of each coupling piece (PCi) is secured to a reinforcing piece (PRi) intended to be secured to said structural part (PS) and to reinforce a front part of said rear panel (TR).

7. Device according to claim 6, **characterised in that** said top end (ES) of each coupling piece (PCi) is secured by screwing to one of said reinforcing pieces (PRi).

8. Device according to one of claims 4 to 7, **characterised in that** it comprises said reinforcing pieces (PRi).

9. Device according to one of claims 4 to 8, **characterised in that** each coupling piece (PCi) is produced by pressing.

10. Motor vehicle (V) comprising a structural part (PS) provided with two rear lateral parts (PLi) defining support zones (ZA) for a backrest of a rear seat, **characterised in that** it comprises a protective device (D) according to one of the preceding claims, and secured to said rear lateral parts (PLi).
